# NEUE EUROPÄISCHE PATENTSCHRIFT

(11) **EP 2 264 325 B2**
(45) Veröffentlichungstag und Bekanntmachung des Hinweises auf die Entscheidung über den Einspruch: **25.10.2023**
(45) Hinweis auf die Patenterteilung: 12.06.2019
(21) Anmeldenummer: 10180657.8
(22) Anmeldetag: 12.09.2003
(51) Int. Cl.: B62J 43/28, B62K 21/12

(54) **Segment eines Käfigs für ein Wälzlager**
Roller bearing cage
Cage pour roulement

(30) Priorität: 08.10.2002 DE 10246825
(43) Veröffentlichungstag der Anmeldung: 22.12.2010
(62) Teilanmeldung aus: 03020732.8
(73) Patentinhaber: AB SKF, 415 50 Göteborg (SE)
(72) Erfinder: Neder, Günter, DE- 97422 Schweinfurt (DE); Gessendorfer, Matthias, DE-97509 Unterspiesheim (DE)
(74) Vertreter: Seifert, Ruth

(56) Entgegenhaltungen:
- DE-A1- 2 409 908
- DE-A1- 3 113 911
- DE-A1- 3 120 265
- DE-A1- 3 509 190
- DE-B- 1 026 577
- DE-U- 1 866 122
- DE-U1- 7 914 789
- DE-U1- 8 607 236
- US-A- 5 015 105

## Beschreibung

Die Erfindung betrifft ein Segment eines Käfigs für ein Wälzlager. Aus Kunststoff gefertigte Käfige sind bereits vielfach bekannt und kommen in den verschiedensten Anwendungen zum Einsatz. Sie zeichnen sich insbesondere durch ihr geringes Gewicht, ihre kostengünstige Herstellung und vergleichsweise hohe Flexibilität aus. In der Regel sind die Kunststoff-Käfige jeweils als ein einteiliges Bauteil gefertigt. Es sind allerdings auch schon Kunststoff-Käfige bekannt geworden, die aus mehreren Segmenten zusammengesetzt sind.

Ein derartiger Segmentkäfig ist aus der DE-U 84 20 133 bekannt. Die Segmente weisen jeweils eine geschlossene Käfigtasche und zwei halbe Käfigtaschen zur Aufnahme von Wälzkörpern auf. Benachbarte Käfigsegmente ergänzen sich mit den halben Käfigtaschen, die durch eingesetzte Rotationskörper aus Gummi auf Abstand gehalten werden. Die Rotationskörper haben ferner die Aufgabe, das Aneinanderschlagen der Käfigsegmente zu verhindern.

Weiterhin ist aus der DE 1026577 ein lagerringgeführter Wälzlagerkäfig aus massivem Metall oder aus einem Blechstück bekannt, der aus mehreren Segmenten besteht, wobei in einem Segment zwei oder mehrere Zylinderrollen oder Kugelrollen untergebracht sind. Nachteilig bei diesem Käfig ist jedoch, dass ein derartiger Wälzlagerkäfig nicht für einen Einsatz bei großen Wälzlagern mit konischen Wälzkörpern geeignet ist. Zum einen ist der aus Metall gefertigte Lagerkäfig, insbesondere bei groß dimensionierten Wälzlagern sehr schwer, was das Gewicht des Lagers insgesamt signifikant erhöht. Eine Ausgestaltung aus Kunststoff verbietet sich bei dieser Art von Käfig jedoch, da sich der lagergeführte Kunststoffkäfig aufgrund der unterschiedlichen Wärmeausdehnungen von Metall und Kunststoff an dem Metalllagerring, an dem er geführt ist, verklemmen würde. Zum anderen kann die Laufringführung des Käfigs als solche insbesondere bei konischen Wälzkörpern ebenfalls zu einem Verklemmen des Lagerkäfigs führen, was durch die unterschiedliche Wärmeausdehnung noch erhöht wird.

Weitere Segmentkäfige sind z.B. aus der DE 79 14 789 U1 und der DE 2 409 908 vorbekannt.

Der Erfindung liegt die Aufgabe zugrunde, einen Käfig bereitzustellen, der sich für einen Einsatz bei sehr großen Wälzlagern mit verhältnismäßig kleinen konischen Rollen eignet.

Diese Aufgabe wird durch die Merkmalskombination des Anspruchs 1 gelöst.

Das erfindungsgemäße Segment eines Käfigs für ein Wälzlager ist aus Kunststoff gefertigt ist und verfügt an seinen entgegengesetzten Enden über je eine Stirnseite. Das Segment weist einen ersten und eine zweiten in Umfangsrichtung verlaufenden Umfangssteg und mehrere Verbindungsstege auf, die die beiden Umfangsstege miteinander verbinden und gemeinsam mit den Umfangsstegen mehrere Taschen zur Aufnahme von konischen Wälzkörpern ausbilden. Die Umfangsstege sind leicht gebogen oder weisen eine Polygonform auf, die einer leichten Biegung folgt, wobei die Biegung des ersten Umfangsstegs einen kleineren Krümmungsradius aufweist als die Biegung des zweiten Umfangsstegs.

Die Taschenform ermöglicht eine sichere Aufnahme der Wälzkörper und eine zuverlässige Führung des Segments an den Wälzkörpern. Ein Käfig mit derartig ausgebildeten Segmenten zeichnet sich durch seine reibungsarmen Laufeigenschaften und seine gute Montierbarkeit bei gleichzeitig geringen Kosten und geringem Gewicht aus.

Weiterhin sind an den Verbindungsstegen Führungsflächen zur Führung des Segments auf den Wälzkörpern ausgebildet. Über diese Führungsflächen können die Führungsverhältnisse präzise vorgegeben werden. Dabei sind die Führungsflächen zur Führung des Segments in dem Bereich der Verbindungsstege, der näher am zweiten Umfangssteg als am ersten Umfangssteg angeordnet ist, ausgebildet.

Weiterhin ist es von Vorteil, wenn an den Verbindungsstegen Vorsprünge ausgebildet sind, zur Führung der Segmente auf einer Laufbahn des Wälzlagers für den Fall, dass keine ausreichende Wälzkörperführung mehr vorliegt oder zur Abstützung der Segmente auf der Laufbahn beim Stillstand des Wälzlagers. Dadurch können das Anlaufverhalten und die Notlaufeigenschaften wesentlich verbessert werden. Insbesondere kann jeder Verbindungssteg, auf seinen beiden den Laufbahnen des Wälzlagers zugewandten Seiten, jeweils wenigstens einen Vorsprung aufweisen.

Die Stirnflächen des Segments sind zwischen den Umfangsstegen vorzugsweise konkav ausgebildet. Dies hat zur Folge, dass benachbarte Segmente beim Anlaufen im Bereich der Umfangsstege aneinander liegen, so dass die aufeinander ausgeübten Kräfte jeweils in einem durch die Umfangsstege abgestützten Bereich eingeleitet werden und somit eine Verformung der Verbindungsstege und ein damit verbundenes Klemmen der Wälzkörper vermieden werden kann.

Das Segment ist vorzugsweise aus Poly-Phenyl-Sulfid (PPS) oder aus Poly-Ether-Ether-Keton hergestellt. Beide Materialien zeichnen sich durch eine sehr gute Alterungsbeständigkeit und eine hohe Lebensdauer aus, so dass das erfindungsgemäße Segment über einen sehr langen Betriebszeitraum eingesetzt werden kann.

Die Umfangsstege können in einem Abstand parallel zueinander verlaufen.

Die Erfindung betrifft auch einen Käfig für ein Wälzlager, der aus mindestens zwei der oben beschriebenen Segmenten besteht. Somit ist der erfindungsgemäße Käfig für ein Wälzlager aus Kunststoff gefertigt und weist mehrere Segmente auf, die an ihren entgegengesetzten Enden über je eine Stirnseite verfügen.

Der erfindungsgemäße Käfig hat den Vorteil, dass aufgrund der durch die Führungsflächen bereitgestellten Wälzkörperführung ein ausreichender Raum für die verglichen mit Stahl höhere Wärmeausdehnung des Käfigs vorgesehen ist. Dieser Raum ist aber gleichzeitig klein genug bemessen, dass es nicht zu einem unvertretbaren Aufeinanderschlagen der Stirnflächen benachbarter Segmente und damit zu einer unzulässig hohen Geräuschentwicklung kommt. Insgesamt zeichnet sich der Käfig durch seine reibungsarmen Laufeigenschaften und seine gute Montierbarkeit bei gleichzeitig geringen Kosten und geringem Gewicht aus.

Bei dem erfindungsgemäßen Käfig weist jedes Segment zwei in Umfangsrichtung verlaufende Umfangsstege und wenigstens zwei Verbindungsstege auf, die die beiden Umfangsstege miteinander verbinden und die gemeinsam mit den Umfangsstegen wenigstens eine Tasche zur Aufnahme eines Wälzkörpers ausbilden.. Die Umfangsstege sind leicht gebogen oder weisen eine Polygonform auf, die einer leichten Biegung folgt, wobei die Biegung des ersten Umfangsstegs einen kleineren Krümmungsradius aufweist als die Biegung des zweiten Umfangsstegs. Die Taschenform ermöglicht eine sichere Aufnahme des Wälzkörpers und eine zuverlässige Führung des Käfigs am Wälzkörper. An den Verbindungsstegen sind Führungsflächen zur Führung der Segmente auf den Wälzkörpern ausgebildet. Über diese Führungsflächen können die Führungsverhältnisse präzise vorgegeben werden. Dabei sind die Führungsflächen zur Führung des Segments in dem Bereich der Verbindungsstege, der näher am zweiten Umfangssteg als am ersten Umfangssteg angeordnet ist, ausgebildet. Weiterhin ist es von Vorteil, wenn an den Verbindungsstegen Vorsprünge ausgebildet sind, zur Führung der Segmente auf einer Laufbahn des Wälzlagers für den Fall, dass keine ausreichende Wälzkörperführung mehr vorliegt oder zur Abstützung der Segmente auf der Laufbahn beim Stillstand des Wälzlagers. Dadurch können das Anlaufverhalten und die Notlaufeigenschaften wesentlich verbessert werden. Insbesondere kann jeder Verbindungssteg, auf seinen beiden den Laufbahnen des Wälzlagers zugewandten Seiten, jeweils wenigstens einen Vorsprung aufweisen.

Die Stirnflächen der Segmente sind zwischen den Umfangsstegen vorzugsweise konkav ausgebildet. Dies hat zur Folge, dass benachbarte Segmente beim Anlaufen im Bereich der Umfangsstege aneinander liegen, so dass die aufeinander ausgeübten Kräfte jeweils in einem durch die Umfangsstege abgestützten Bereich eingeleitet werden und somit eine Verformung der Verbindungsstege und ein damit verbundenes Klemmen der Wälzkörper vermieden werden kann.

Die einzelnen Segmente sind untereinander vorzugsweise nicht mechanisch verbunden und somit relativ zueinander verschiebbar, so dass eine Verformung und eine dabei auftretende erhöhte Reibung sowie ein erhöhter Verschleiß vermieden werden können.

Der Käfig ist vorzugsweise aus Poly-Phenyl-Sulfid (PPS) oder aus Poly-Ether-Ether-Keton hergestellt. Beide Materialien zeichnen sich durch eine sehr gute Alterungsbeständigkeit und eine hohe Lebensdauer aus, so dass der erfindungsgemäße Käfig über einen sehr langen Betriebszeitraum eingesetzt werden kann.

Die Erfindung wird nachstehend anhand des in der Zeichnung dargestellten Ausführungsbeispiels erläutert.

Es zeigen:
- Figur 1: ein Segment des erfindungsgemäßen Käfigs in perspektivischer Darstellung,
- Figur 2: den erfindungsgemäßen Käfig in einer schematischen Aufsicht und
- Figur 3: das Segment in einer Schnittdarstellung.

Der erfindungsgemäße Käfig besteht aus mehreren Segmenten, die in Umfangsrichtung ohne feste Verbindung aneinandergereiht sind. Im folgenden wird ein Ausführungsbeispiel des erfindungsgemäßen Käfigs beschrieben, das für einen Einsatz in einem Kegelrollenlager vorgesehen ist, d.h. die einzelnen Segmente liegen nicht plan in einer Ebene, sondern sind alle um den gleichen Winkel zu der Ebene geneigt.

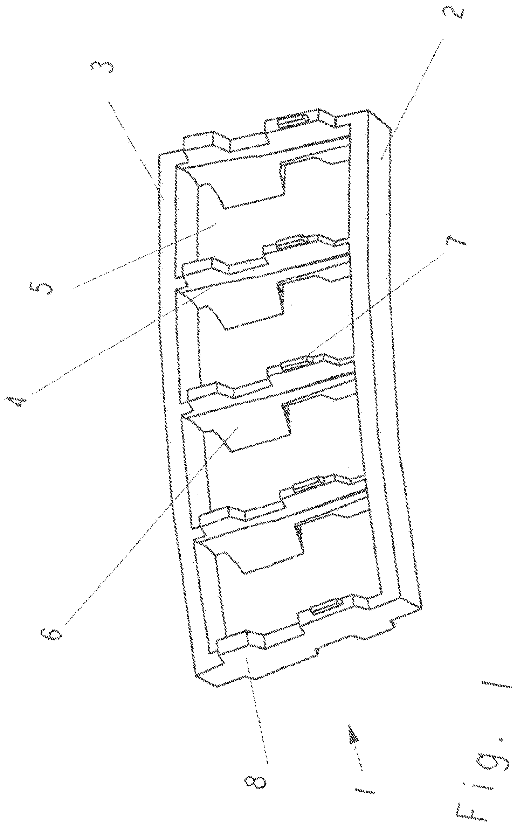

Figur 1 zeigt ein Segment 1 des erfindungsgemäßen Käfigs in perspektivischer Darstellung. Das Segment 1 weist zwei in einem Abstand parallel zueinander verlaufende Umfangsstege 2 und 3 auf. Die Umfangsstege 2 und 3 sind leicht gebogen oder besitzen eine Polygonform, die einer leichten Biegung folgt. Dabei weist die Biegung des ersten Umfangsstegs 2 einen kleineren Krümmungsradius als die Biegung des zweiten Umfangsstegs 3 auf. Zwischen den Umfangsstegen 2 und 3 erstrecken sich Verbindungsstege 4, die ungefähr senkrecht zu den Umfangsstegen 2 und 3 orientiert sind. Insgesamt werden durch die Umfangsstege 2 und 3 und die Verbindungsstege 4 mehrere Taschen 5 ausgebildet, die im dargestellten Ausführungsbeispiel der Aufnahme konischer Wälzkörper dienen. Zur Führung des Segments 1 an den Wälzkörpern weisen die Verbindungsstege 4 jeweils seitlich angeformte Führungsflächen 6 auf. Die Führungsflächen 6 sind in dem Bereich der Verbindungsstege 4, der näher am zweiten Umfangssteg 3 als am ersten Umfangssteg 2 angeordnet ist, besonders stark ausgeprägt.

Die Verbindungsstege 4 erstrecken sich in einer Richtung senkrecht zu der Ebene, in der die Taschen 5 angeordnet sind, so weit, dass sie beim Betrieb des Wälzlagers nur geringfügig hinter den Wälzkörpern zurückstehen und somit die Laufbahnen des Wälzlagers gerade nicht berühren. Dies führt dazu, dass sich die Käfigsegmente 1 beim Stillstand des Lagers auf die Laufbahnen abstützen können und eine derartige Abstützung auch bei einem übermäßigen Verschleiß erfolgt, um die dann nicht mehr vorhandene Wälzkörperführung der Segmente 1 zu ersetzen. Hierzu sind auf den Verbindungsstegen 4 Vorsprünge 7 ausgebildet. Die Vorsprünge 7 sind nicht nur auf der in Figur 1 sichtbaren Oberseite des Segments 1 ausgebildet, sondern auch auf der Unterseite.

Der erste und der letzte Verbindungssteg 4 des Segments 1 weisen auf ihren nach außen gerichteten Stirnflächen 8 jeweils keine Führungsflächen 6 auf, da in diesem Bereich kein Wälzkörper angeordnet wird, sondern das nächste Segment 1. Weiterhin sind die Stirnflächen 8 der Verbindungsstege 4 zwischen den Umfangsstegen 2 und 3 konkav ausgebildet. Dadurch ist sichergestellt, dass einander benachbarte Segmente sich im Bereich der Umfangsstege 2 und 3 berühren. Auf diese Art und Weise kann vermieden werden, dass es durch die Einwirkung benachbarter Segmente 1 aufeinander zu einer Verformung der Verbindungsstege und damit zu einem Klemmen der Wälzkörper kommt, die in den Taschen 5 zwischen den Verbindungsstegen 4 angeordnet sind.

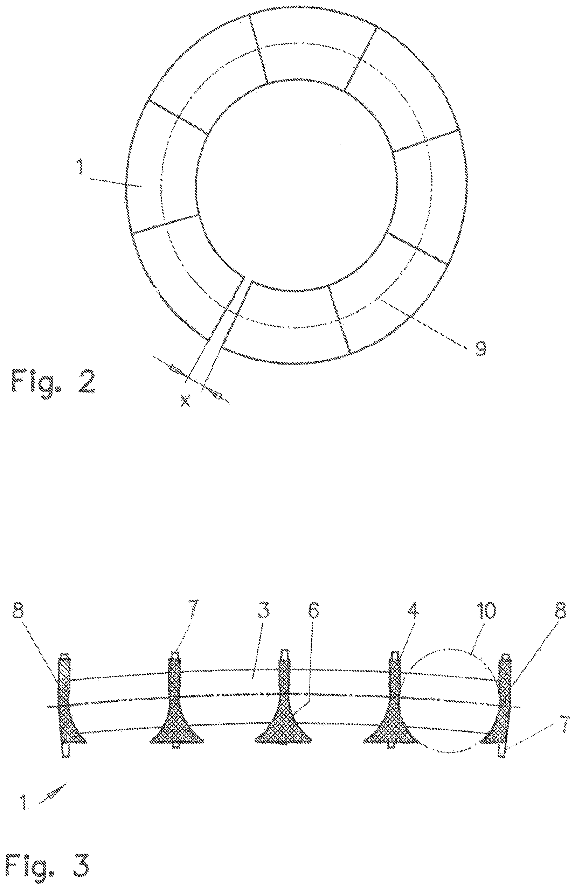

Ein wesentlicher Aspekt der Erfindung bezieht sich auf die Dimensionierung der Segmente 1 des Käfigs. Diese Dimensionierung ist so zu wählen, dass bei einer spaltfreien Aneinanderreihung der Segmente 1 an ihren Stirnseiten 8 in einer Art, wie der Käfig im Wälzlager angeordnet wird, zwischen den benachbarten Stirnseiten 8 eines letzten und eines ersten Segments 1 ein Zwischenraum verbleibt. Die mittlere Ausdehnung des Zwischenraums in Umfangsrichtung muss bei Raumtemperatur einen Wert aufweisen, der zwischen 0,15 % und 1,0 % des Umfangs eines Kreises beträgt, der mittig durch die aneinandergereihten Segmente 1 verläuft. Diese Geometrie wird im Einzelnen anhand von Figur 2 erläutert.

Figur 2 zeigt den erfindungsgemäßen Käfig in Aufsicht, wobei die einzelnen Segmente 1 stark schematisiert dargestellt sind. Durch eine gestrichelte Linie ist ein mittig zwischen dem ersten Umfangssteg 2 und dem zweiten Umfangssteg 3 verlaufender Kreis 9 dargestellt. Der Kreis 9 verläuft derart mittig durch die Taschen 5 der Segmente 1, dass er in die Taschen 5 eingesetzte Wälzkörper 10 jeweils auf ihrer Rotationsachse und in der Mitte ihrer axialen Längenausdehnung durchdringt. Um die Dimensionen des Kreises 9 und damit auch die Abmessungen der Segmente 1 präzise zu ermitteln, wird das Wälzlager herangezogen, bei dem der Käfig eingesetzt wird. Der Kreis 9 verläuft dort in der Mitte der axialen Längenausdehnung der Wälzkörper 10 durch deren Rotationsachsen. Auf den Umfang dieses Kreises 9 ist bei der Dimensionierungsregel der in Figur 2 mit x bezeichnete Abstand der Stirnflächen 8 bezogen. Die Einhaltung der Dimensionierungsregel, die auf die Verhältnisse bei Raumtemperatur bezogen ist, ist von größter Bedeutung für eine einwandfreie Funktionsweise. Würde man auf den Abstand x ganz verzichten, d.h. sämtliche Segmente 1 würden spaltfrei aneinander stoßen, so würden sich bei einer Temperaturerhöhung starke Spannungen im Käfig ausbilden, da sich das Kunststoffmaterial des Käfigs wesentlich stärker thermisch ausdehnt als das aus Stahl gefertigte Wälzlager. Die Spannungen würden zu einer Erhöhung der Reibung, zu einem Verklemmen oder gar zu einem Bruch des Käfigs führen. Entsprechendes gilt auch, wenn ein unterer Grenzwert von 0,15 % für das Verhältnis zwischen dem Abstand x und dem Umfang des Kreises 9 wesentlich unterschritten wird. Wählt man den Abstand x dagegen größer als einen oberen Grenzwert in Höhe von 1,0 %, so schlagen die Segmente 1 insbesondere bei einem Betrieb des Wälzlagers bei niedrigen Temperaturen stark aneinander und verursachen dadurch ein hohes Geräusch- und Schwingungsniveau, was zum einen störend wirkt und zum anderen Schäden verursachen kann. Außerdem besteht die Gefahr, dass es durch das Aufeinanderschlagen zu einem Verschleiß kommt. In dem erfindungsgemäß vorgeschlagenen Intervall für den Abstand x lässt sich ein optimaler Ausgleich zwischen der Gefahr der Entstehung von Spannungen und den negativen Auswirkungen eines unzulässig starken Aneinanderschlagens der Segmente 1 erzielen.

Figur 3 zeigt das Segment 1 in Schnittdarstellung. Der Schnitt ist quer zu den Verbindungsstegen 4 geführt. Zum besseren Verständnis ist in einer der Taschen 5 der Umriss eines Wälzkörpers 10 innerhalb der Schnittebene eingezeichnet. Der Wälzkörper 10 liegt an den Führungsflächen 6 der Verbindungsstege 4 an und überragt die Verbindungsstege 4 geringfügig. Dadurch ist zum einen eine gute Wälzkörperführung des Käfigs gegeben und zum anderen die Möglichkeit einer Laufbahnführung bei zunehmendem Verschleiß vorgesehen. In der Darstellung der Figur 3 sind die Vorsprünge 7 auf der Oberseite und auf der Unterseite des Segments zu erkennen.

### Bezugszeichen

1 Segment
2 erster Umfangssteg
3 zweiter Umfangssteg
4 Verbindungssteg
5 Tasche
6 Führungsfläche
7 Vorsprung
8 Stirnfläche
9 Kreis durch die Mitte des Käfigs
10 Wälzkörper

## Patentansprüche

1. Segment eines Käfigs für ein Wälzlager, wobei das Segment (1) aus Kunststoff gefertigt ist und an seinen entgegengesetzten Enden über je eine Stirnseite (8) verfügt, wobei das Segment (1) einen ersten in Umfangsrichtung verlaufenden Umfangssteg (2) und einen zweiten in Umfangsrichtung verlaufenden Umfangssteg (3), die in einem Abstand, parallel zueinander verlaufen, und mehrere Verbindungsstege (4) aufweist, die die beiden Umfangsstege (2, 3) miteinander verbinden und ungefähr senkrecht zu den Umfangsstegen (2; 3) orientiert sind, und gemeinsam mit den Umfangsstegen (2, 3) mehrere Taschen (5) zur Aufnahme von konischen Wälzkörpern (10) ausbilden, **dadurch gekennzeichnet, dass** die Umfangsstege (2, 3) leicht gebogen sind oder eine Polygonform aufweisen, die einer leichten Biegung folgt, und die Biegung des ersten Umfangsstegs (2) einen kleineren Krümmungsradius aufweist als die Biegung des zweiten Umfangsstegs (3), und dass an den Verbindungsstegen (4) Führungsflächen zur Führung des Segments (1) auf den Wälzkörpern (10) ausgebildet sind, die in einem Bereich der Verbindungsstege (4), der näher am zweiten Umfangssteg (3) als am ersten Umfangssteg (2) angeordnet ist, ausgebildet sind.

2. Segment nach einem der vorhergehenden Ansprüche, **dadurch gekennzeichnet, dass** an den Verbindungsstegen (4) Vorsprünge (7) ausgebildet sind zur Führung des Segments (1) auf einer Laufbahn des Wälzlagers, wenn keine ausreichende Wälzkörperführung mehr vorliegt, oder zur Abstützung des Segments (1) auf der Laufbahn beim Stillstand des Wälzlagers.

3. Segment nach Anspruch 2, **dadurch gekennzeichnet, dass** die Verbindungsstege (4) auf ihren beiden den Laufbahnen des Wälzlagers zugewandten Seiten jeweils wenigstens einen Vorsprung (7) aufweisen.

4. Segment nach einem der vorhergehenden Ansprüche, **dadurch gekennzeichnet, dass** die Stirnflächen (8) des Segments (1) zwischen den Umfangsstegen (2, 3) konkav ausgebildet sind.

5. Segment nach einem der vorhergehenden Ansprüche, **dadurch gekennzeichnet, dass** das Segment (1) aus Poly-Phenyl-Sulfid oder aus Poly-Ether-Ether-Keton gefertigt ist.

6. Wälzlagerkäfig bestehend aus mindestens zwei Segmenten nach einem der vorhergehenden Ansprüche.

## Claims

1. Segment of a cage for a rolling bearing, wherein the segment (1) is manufactured from plastic and has at each of its opposite ends an end face (8), the segment (1) having a first circumferential web (2) running in the circumferential direction and a second circumferential web (3) running in the circumferential direction, which run parallel to one another at a distance, and a plurality of connecting webs (4) which connect the two circumferential webs (2, 3) to one another and are oriented approximately perpendicularly to the circumferential webs (2, 3) and, together with the circumferential webs (2, 3), form a plurality of pockets (5) for receiving conical rolling bodies (10), **characterized in that** the circumferential webs (2, 3) are slightly bent or have a polygonal shape which follows a slight bending, and the bending of the first circumferential web (2) has a smaller radius of curvature than the bending of the second circumferential web (3), and **in that** guide surfaces for guiding the segment (1) on the rolling bodies (10) are formed on the connecting webs (4), which guide surfaces are formed in a region of the connecting webs (4) which is arranged closer to the second circumferential web (3) than to the first circumferential web (2).

2. Segment according to one of the preceding claims, **characterized in that** projections (7) are formed on the connecting webs (4) for the purpose of guiding the segment (1) on a raceway of the rolling bearing when there is no longer sufficient rolling-body guidance or for the purpose of supporting the segment (1) on the raceway when the rolling bearing is at a standstill.

3. Segment according to Claim 2, **characterized in that** the connecting webs (4) have at least one projection (7) on each of their two sides facing the raceways of the rolling bearing.

4. Segment according to one of the preceding claims, **characterized in that** the end faces (8) of the segment (1) are formed concavely between the circumferential webs (2, 3).

5. Segment according to one of the preceding claims, **characterized in that** the segment (1) is manufactured from polyphenylene sulfide or from polyether ether ketone.

6. Rolling bearing cage consisting of at least two segments according to one of the preceding claims.

## Revendications

1. Segment d'une cage pour un palier à roulement, dans lequel le segment (1) est fabriqué en plastique et présente à ses extrémités opposées respectivement une face frontale (8), dans lequel le segment (1) présente une première nervure circonférentielle (2) s'étendant dans la direction circonférentielle et une deuxième nervure circonférentielle (3) s'étendant dans la direction circonférentielle, qui s'étendent à distance en parallèle l'une à l'autre, et plusieurs nervures (4) qui relient l'une à l'autre les deux nervures circonférentielles (2, 3) et sont orientées de manière approximativement perpendiculaire aux nervures circonférentielles (2, 3), et réalisent conjointement avec les nervures circonférentielles (2, 3) plusieurs cavités (5) pour recevoir des corps de roulement coniques (10),
**caractérisé en ce que** les nervures circonférentielles (2, 3) sont légèrement courbes ou présentent une forme polygonale suivant une légère courbure, et la courbure de la première nervure circonférentielle (2) présente un rayon de courbure inférieur à la courbure de la deuxième nervure circonférentielle (3), et **en ce que** des surfaces de guidage sont réalisées sur les nervures de liaison (4) pour guider le segment (1) sur les corps de roulement (10) qui sont réalisés dans une zone des nervures de liaison (4) qui est disposée plus près de la deuxième nervure circonférentielle (3) que de la première nervure circonférentielle (2).

2. Segment selon l'une quelconque des revendications précédentes, **caractérisé en ce que** des saillies (7) sont réalisées sur les nervures de liaison (4) pour le guidage des segments (1) sur un chemin de roulement du palier à roulement lorsqu'il n'y a plus de guidage suffisant des corps de roulement, ou pour le support des segments (1) sur le chemin de roulement lorsque le palier à roulement est immobile.

3. Segment selon la revendication 2, **caractérisé en ce que** les nervures de liaison (4) présentent respectivement au moins une saillie (7) sur leurs deux côtés tournés vers les chemins de roulement du palier à roulement.

4. Segment selon l'une quelconque des revendications précédentes, **caractérisé en ce que** les faces frontales (8) des segments (1) sont réalisées de manière concave entre les nervures circonférentielles (2, 3).

5. Segment selon l'une quelconque des revendications précédentes, **caractérisé en ce que** le segment (1) est fabriqué en polysulfure de phénylène ou en polyétheréthercétone.

6. Cage de palier à roulement, composée d'au moins deux segments selon l'une quelconque des revendications précédentes.
